(19) Europäisches Patentamt
European Patent Office
Office européen des brevets

(11) **EP 3 506 551 B1**

## (12) EUROPEAN PATENT SPECIFICATION

(45) Date of publication and mention
of the grant of the patent:
**09.09.2020 Bulletin 2020/37**

(51) Int Cl.:
**H04L 9/08** (2006.01)

(21) Application number: **17210860.7**

(22) Date of filing: **28.12.2017**

(54) **METHOD AND SYSTEM FOR PROVIDING A PRE-DETERMINED KEY TO A CLASSICAL COMPUTER OF A PUBLIC HYBRID QUANTUM AND CLASSICAL NETWORK**

VERFAHREN UND SYSTEM ZUR BEREITSTELLUNG EINES VORBESTIMMTEN SCHLÜSSELS AN EINEN KLASSISCHEN COMPUTER EINES ÖFFENTLICHEN HYBRIDEN QUANTUMS UND KLASSISCHES NETZWERK

PROCÉDÉ ET SYSTÈME POUR FOURNIR UNE CLÉ PRÉDÉTERMINÉE À UN ORDINATEUR CLASSIQUE DE QUANTUM HYBRIDE PUBLIQUE ET RÉSEAU CLASSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2019 Bulletin 2019/27**

(73) Proprietor: **Atos Nederland B.V.**
**1185 MC Amstelveen (NL)**

(72) Inventor: **KERLING, Frederik Cornelius Adriaan**
**3438 Le Nieuwegein (NL)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**US-A1- 2005 036 624**

- **AGUADO ALEJANDRO ET AL: "Hybrid conventional and quantum security for software defined and virtualized networks", JOURNAL OF OPTICAL COMMUNICATIONS AND NETWORKING, INSTITUTE OF ELECTRICAL AND ELECTRONICS ENGINEERS, US, vol. 9, no. 10, 1 October 2017 (2017-10-01), pages 819-825, XP011671107, ISSN: 1943-0620, DOI: 10.1364/JOCN.9.000819 [retrieved on 2017-10-10]**
- **LEE OESTERLING ET AL: "Comparison of commercial and next generation quantum key distribution: Technologies for secure communication of information", HOMELAND SECURITY (HST), 2012 IEEE CONFERENCE ON TECHNOLOGIES FOR, IEEE, 13 November 2012 (2012-11-13), pages 156-161, XP032330354, DOI: 10.1109/THS.2012.6459842 ISBN: 978-1-4673-2708-4**
- **NORMAND J BEAUDRY: "Assumptions in Quantum Cryptography", ARXIV.ORG, CORNELL UNIVERSITY LIBRARY, 201 OLIN LIBRARY CORNELL UNIVERSITY ITHACA, NY 14853, 11 May 2015 (2015-05-11), XP080792535,**

**Description**

**Field of the Invention**

The present invention relates to hybrid quantum and classical networks comprising quantum computers and classical computers, and more precisely to the provision of public keys in such hybrid networks.

**Background**

In some hybrid (quantum and classical) networks, as in classical (or traditional) networks, public keys are essential for performing some processings. This is notably the case of authentication, decryption and encryption.

As known by those skilled in the art, quantum communications between quantum computers involve encoding information via quantum states, or "qubits" (or quantum bits), unlike classical communications which make use of bits (0 and 1).

Some Quantum key distribution protocols allow utilizing the quantum network to make entangled (or superposed) pairs of quantum states over long distances and measuring these entangled pairs of quantum states to create a unique private key in two distant classical computers of this quantum and classical hybrid network. Due to the monogamy of states, only the sender end receiver will know the private key. So, a quantum key distribution protocol exploits certain properties of the quantum states to ensure its own security and therefore the quantum communications.

Quantum key distribution protocols allow the sender to share (or "send") a random key across the hybrid network, but they do not allow a sender to send a pre-defined deterministic key across the hybrid network. Almost all quantum key distribution protocols rely on the increase of entropy via extraction of information via classical means of a quantum state. In that sense they are exclusively random by design.

**Summary**

So an object of this invention is to improve the situation, and notably to allow a sender to provide a distant classical computer with a deterministic bit string defining a private key, via public classical and quantum channels.

An object of the invention comprises to send a pre-determined key, a single time, allowing for maximal entropy during transmission, but also for minimal entropy during local retrieval. For this it trades of local resources and time, but allows us to send pre-defined strings of information across quantum networks.

In an embodiment, the invention concerns a method according to claim 1.

The method may include additional characteristics considered separately or combined, and notably:

- in said fourth step said nth classical computer (CCn) gets P measurement results from respectively said P spin-off states $| \Psi_{SO} \rangle$ and determines an average result from said P measurement results;
- in said fourth step said protocol comprises extracting a chosen part from sub-parts of said average result and combining said extracted chosen parts to retreive said deterministic bit string;
- in said fourth step each of said average result sub-parts may be measured as percentage, and said nth classical computer (CCn) extracts K most significant figures from each of said average result sub-parts;
- in said first step said operator $\hat{p}_n$ is represented by at least one gate-based non-unitary quantum circuit of said nth quantum computer (QCn) located at the nth location and coupled to said nth classical computer (CCn).
- in said first step each first state $| \Psi_D \rangle_n$ is defined by at least one qubit;
- in said first step said spin-off state $| \Psi_{SO} \rangle_{n2}$ is orthogonal to said defined first state $| \Psi_D \rangle_n$ if they are in equal Hilbert spaces, n=n2.

In another embodiment, the invention concerns a method according to claim 1. a control device a control device according to claim 8.

For instance, the first processing means and the first control means may be intended to equip a control computer.

Also for instance, the third control means and the third processing means may be intended to be distributed into each of the N classical computers.

Also for instance, the second processing means may be intended to be distributed into each of the N quantum computers.

**Brief Description of the Figures**

Some embodiments of a system in accordance with embodiments of the present invention are now described, by way of example only, and with reference to the accompanying drawings, in which:

- Figure 1 schematically and functionally illustrates an example of embodiment of a hybrid network comprising an example of embodiment of a system according to the invention, and
- Figure 2 schematically illustrates an example of algorithm implementing a method according to the invention.

**Description of Embodiments**

Hereafter are notably disclosed a method, and an associated system CS, intended for providing a non-random deterministic bit string to one of N classical (or traditional) computers CCn belonging to a hybrid network HN.

One means here by "hybrid network" a communication network comprising at least one classical (or traditional) network to which is connected at least two classical (or traditional) computers and at least one quantum network to which is connected at least two quantum computers also coupled to an associated classical (or traditional) computer. A classical computer and its associated quantum computer are at a same location.

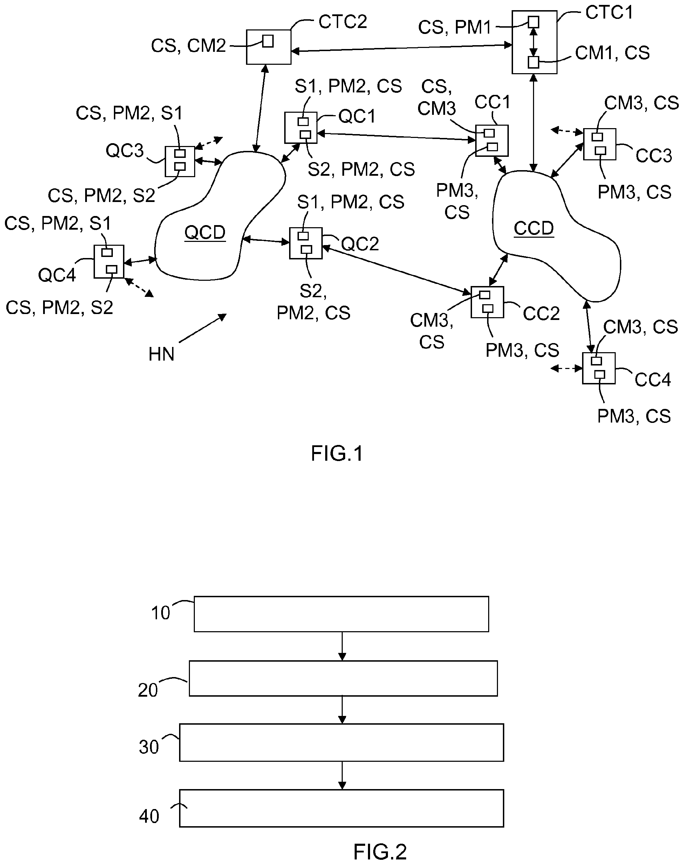

An example of embodiment of a hybrid network HN comprising an example of embodiment of a system CS according to the invention is illustrated schematically and functionally in Figure 1. In this non-limiting example, the classical network of the hybrid network HN comprises a classical cloud CCD to which are connected four classical computers CC1 to CC4 (n = 1 to 4, N = 4) and a first control computer CTC1, and the quantum network of the hybrid network HN comprises a quantum cloud QCD to which are connected four quantum computers QC1 to QC4 (n = 1 to 4, N = 4) and a second control computer CTC2.

The number N (n = 2 to N) can take any value equal to or greater than two (at minima a sender and a receiver). So N may be equal to 10 or 100 or 1000, for instance.

Each classical computer CCn is coupled to an associated quantum computer QC and the first control computer CTC1 is coupled to the second control computer CTC2. Moreover, the N quantum computers QCn have respectively N locations within the quantum network, and each of them (QCn) is associated to two (first and second) separable Hilbert spaces.

The N classical computers CCn and the first control computer CTC1 communicate therebetween via the classical cloud CCD, which may be a communication infrastructure of any type (for instance "Internet").

The N quantum computers QCn and the second control computer CTC2 communicate therebetween via the quantum cloud (or infrastructure) QCD.

As mentioned before, the invention notably proposes a method intended for providing a non-random deterministic bit string (defining a pre-determined key via public channels) to a nth classical computer CCn of the hybrid network HN.

The method described below defines a protocol which utilizes the metaphor of a door and a key. In general classical computation the key is the "key-element" in unlocking the door. In the invention, one essentially shares a non-random deterministic bit string (defining a public key extraction protocol) that could be known to many, but have a door that is only visible/usable to the person it is supposed to be used by in one of the N classical computers CCn. The quantum quirkiness is that a door does not have to be determined in location to provide access to a physical asset, and the door will disappear once someone looks at it. So only the placer of the door will know where it is, and it requires a distinct method to open it in the first place. This is described in the last 2 steps of figure 2. Toto

For instance, in the quantum network, one can create an entangled state that spans many miles between different quantum computers QCn. This means that it is possible to create a state, spanning many miles and different end-points that together form the same quantum "door" (or first) state. Rather than observing the door, one toggles the quantum door state to make it induce a change without completely observing it. This results in a spin-off quantum state in the quantum computer QCn that is coupled to the classical computer CCn concerned by the public key. This may require the spin-off state to be orthogonal to the original state to prevent degrading the original door state due to measurement of (partial) entanglement between door state and spin-off state.

Thanks to multiple toggling of the door state one is able to look up information in an otherwise random set, because two things are ensured: there is information in the public key and this information only makes sense when it is used on the right door state, and the location verification must be ensured beforehand. The key (an operator in quantum terms) itself does not hold enough information to be decrypting the door state, as this is mathematically made impossible, whereas the door state is impossible to be measured by an interceptor to an enough extend to provide enough information to decrypt the door state. Hence integrity is ensured by the laws of physics and mathematics.

As illustrated in the non-limiting example of algorithm of Figure 2, the method comprises four steps 10 to 40 which may be implemented, at least partly, by the system CS into the hybrid network HN.

As illustrated in Figure 1, a system CS according to the invention comprises at least first PM1, second PM2 and third PM3 processing means, and first CM1, second CM2 and third CM3 control means.

The first processing means PM1 and the first control means CM equip preferably the first control computer CTC1. In the first step the states are defined at the senders location. In the second step the operator, and many-door state are uploaded via the CTC to the QCD (but the CTC can only facilitate entanglement generation, and does not see the many-door state. The second processing means PM2 are preferably distributed into each of the N quantum computers QCn. The third control means CM3 and the third processing means PM3 are preferably distributed into each of the N classical computers CCn.

In the first step 10 of the method, one first defines a deterministic bit string for a nth classical computer CCn. This definition can be performed by the first processing means PM1, but this is not mandatory.

Then one (the first processing means PM1) defines a first (or door) state $|\Psi_D\rangle_n$ for a first Hilbert space at a nth location (i.e. a first quantum computer QCn) from this deterministic bit string, and N-1 other first states $|\Psi_D\rangle_n$ for respectively the N-1 other first Hilbert spaces at the N-1 other locations (i.e. the N-1 other first quantum computers QCn' (with n' ≠ n)).

It is important to mention that the first state definition (or engineering) results in a pure definition. Indeed, the first state itself cannot be classically made and this is only the "recipe" to create it in a quantum computer QCn that can be defined.

For instance, each first (or door) state $|\Psi_D\rangle_n$ may be defined by at least one qubit. The number of qubits depends on the strain of the quantum network versus the strain of the local quantum computers QCn. It is possible to use a single qubit as $|\Psi_D\rangle_n$ to represent a number of 50 digits, however this would require many repetitions of operator $\hat{p}_n$. Similarly, one can use 50 qubits as a state for $|\Psi_D\rangle_n$ and only perform a handful of repetitions of the operator $\hat{p}_n$ defined below.

Then one (the first processing means PM1) defines a second (or many-door) state $|\Psi_D\rangle_n$ from these N defined first (or door) states $|\Psi_D\rangle_n$ respectively associated to the N quantum computers QCn and representing respectively the N locations.

This second (or many-door) state $|\Psi_{MD}\rangle$ may be defined as a direct (or Kronecker) product of the N defined first states $|\Psi_D\rangle_n$ :

$$|\Psi_{MD}\rangle = |\Psi_D\rangle_1 \otimes \dots \otimes |\Psi_D\rangle_n \otimes \dots \otimes |\Psi_D\rangle_N \,,$$

where the subscript indices represent the quantum Hilbert spaces of the N quantum computers QCn on locations 1, 2, ..., n, ...N, and $\otimes$ is the direct product between Hilbert spaces.

A functional door state $|\Psi_{Functional}\rangle$ could implement a random number of dummy door states $|\Psi_{Dummy\,Doors}\rangle$ : $|\Psi_{Functional}\rangle = |\Psi_D\rangle_n \otimes |\Psi_{Dummy\,Doors}\rangle$. But this is not a requirement for the method (or protocol) to function. It is an increased obfuscation of the door states, increasing security.

Then one (the first processing means PM1) defines an operator $\hat{p}_n = (|\Psi_D\rangle\langle\Psi_D|_n + |\Psi_{SO}\rangle\langle\Psi_{SO}|_{n2})$ for the nth classical computer CCn where the deterministic bit string is to be used. This operator is adjoined to the first (or Door) states, such that at the nth location of measurement of spin-off state $|\Psi_{SO}\rangle_{n2}$ created in the second Hilbert space at location n by applying the operator will give information about the target deterministic bit string.

Here, $|\Psi_{SO}\rangle$ is a spin-off state contains the deterministic bit string after repetitive measurement and retrieval protocol application, resulting from multiple applications of the operator $\hat{p}_n$ to the first state $|\Psi_D\rangle_n$ defined for the nth quantum computer QCn, and being orthogonal to the first (or door) state $|\Psi_D\rangle_n$ of this nth quantum computer QCn (so $\langle\Psi_D|I_n \cdot |\Psi_{SO}\rangle_{n2} = 0$), which is given if Hilbert Space n is unequal to Hilbert Space n2.

For instance, the spin-off state $|\Psi_{SO}\rangle$ may consist out of two qubits (1,2): $|\Psi_{SO}\rangle = A|1\rangle_1 + B|0\rangle_1 + C|1\rangle_2 + D|0\rangle_2$.

More, n2 designates the second Hilbert space on the nth location of the nth quantum computer QCn, and $\hat{p}_n \cdot \hat{p}_m = \hat{p}_n \cdot \delta_{nm}$.

In this first step the operator $\hat{p}_n$ may be represented by at least one non-unitary gate-based quantum circuit of the nth quantum computer QCn, located at the nth location and coupled to the nth classical computer CCn.

In fact, the operator $\hat{p}_n$ is more than a simple circuit, as quantum circuits are unitary while this operator $\hat{p}_n$ is not (it acts upon a different Hilbert space based upon the value in another Hilbert space). The operator $\hat{p}_n$ can be technically seen as a certain action upon an interacting medium between different types of qubits, such as optical qubits or NV ("Nitrogen-Vacancy") qubits and ion of superconducting qubits.

In the second step of the method, one transmits the operator $\hat{p}_n$ and a definition of a protocol intended for retrieving the deterministic bit string to the nth classical computer CCn. The first control means CM1 may be in charge of controlling and triggering this transmission.

There is no predefined need for special encryption of the formulation of the operator $\hat{p}_n$ and protocol definition. But since the latter are typically very small, standard grade encryption can be performed with an existing standard.

Also in the second step the second (or many-door) state $|\Psi_{MD}\rangle$ is set-up into the N quantum computers QCn via the quantum network (and more precisely via the quantum cloud QCD). The second control means CM2 is in charge of controlling this set-up of the second (or many-door) state $|\Psi_{MD}\rangle$. So, the quantum cloud QCD has become the carrier of the state $|\Psi_{MD}\rangle$, with N end-points of the state $|\Psi_{MD}\rangle$. In this case the state $|\Psi_D\rangle_n$ can be separable if end-points are confirmed, otherwise depending on the interdependencies of the end-points, the state $|\Psi_{MD}\rangle$ can be varied. In other words, for simplicity the quantum cloud QCD can be seen as a mere carrier of the state $|\Psi_{MD}\rangle$, that enjoys monogamy of states and hence cannot intrinsically be copied.

In other words, it is important to note that in the quantum network there is physically no real distinction of location between the second control computer CTC2, the quantum cloud QCD, and the first part S1 of the second processing means PM2 of the nth quantum computer QCn from a quantum perspective. They are entangled in the many-door state $|\Psi_{MD}\rangle$. So, the first (or door) state exists at all the N locations.

Also in the third step 30, the nth classical computer CCn transmits the operator $\hat{p}_n$ to the nth quantum computer QCn. The third control means CM3 of the nth classical computer CCn is in charge of controlling this transmission. The operator $\hat{p}_n$, which is defined as an operation upon the quantum hardware, can be send to the nth quantum computer QCn via a compiler. It is not optimized, though in theory it could be possible. Once received, the operator $\hat{p}_n$ is locally defined, will not be altered, and is hardware specific.

In the fourth step 40 of the method, the nth quantum computer QCn applies P times the transmitted operator $\hat{p}_n$ on the first (or door) state $|\Psi_D\rangle_n$ (resulting from the second (or many-door) state $|\Psi_{MD}\rangle$ set-up) to obtain P spin-off states $|W_{SO}\rangle$. Each operator application is defined by the following relation: $\hat{p}_n \cdot |\Psi_D\rangle_n = |\Psi_D\rangle_n + |\Psi_{SO}\rangle_{n2}$. The second processing means PM2 of the nth quantum computer QCn is in charge of these P operator applications. The P applications can be performed in parallel or in series.

Because the spin-off state $|\Psi_{SO}\rangle$ is presiding in a second Hilbert space that is different from the first Hilbert space of the first (or door) state $|\Psi_D\rangle_n$, the latter ($|\Psi_D\rangle_n$) is unaffected but rather used as input for the spin-off state $|\Psi_{SO}\rangle$. Hence determination of the spin-off state $|\Psi_{SO}\rangle$ does not affect the first state $|\Psi_D\rangle_n$. This requires the second processing means PM2 of the nth quantum computer QCn to be divided into first S1 and second S2 sub-parts as illustrated. These first S1 and second S2 sub-parts are only coupled (or bridged) and use respectively different types of qubits. For instance the first sub-part S1 (which "is" in the first state $|\Psi_D\rangle_n$ and is associated to the first Hilbert space) may use optical qubits or NV-qubits, and the second sub-part S2 (which "applies" P times the operator $\hat{p}_n$ on the first (or door) state $|\Psi_D\rangle_n$ and is associated to the second Hilbert space) may use ion of superconducting qubits. This use of two different types of qubits is the easiest way for satisfying in a nth quantum computer QCn to the orthogonal requirement between the spin-off state $|\Psi_{SO}\rangle$ and the first (or door) state $|\Psi_D\rangle_n$. Without such type differences of qubits the quantum states, which are quite demanding in the quantum network, would have to be re-iterated.

Then the nth classical computer CCn determines an average result $|\overline{\Psi_{SO}}\rangle$ from these P obtained spin-off states $|\Psi_{SO}\rangle$ and applies the transmitted protocol to this determined average result $|\overline{\Psi_{SO}}\rangle$ to retrieve the deterministic bit string (defined in the first step 10). The third processing means PM3 of the nth classical computer CCn is in charge of these average result determination and protocol application.

For instance, in this fourth step 40 the nth classical computer CCn (and more precisely its third processing means PM3) may obtain P measurement results from respectively the P spin-off states $|\Psi_{SO}\rangle$ and then may determine the average result $|\overline{\Psi_{SO}}\rangle$ from these P measurement results.

In this case, in the fourth step 40 the protocol may comprise extracting a chosen part from sub-parts of the average result $|\overline{\Psi_{SO}}\rangle$ and combining these extracted chosen parts to retreive the deterministic bit string (defined in the first step 10).

For instance, each of the average result sub-parts may be a percentage, and the nth classical computer CCn (and more precisely its third processing means PM3) may extract K most significant figures from each of these average result sub-parts, as can be defined by the transmitted protocol.

The number K may be dependent on the underlying technology.. P is dependent on K. and may also be dependent on the state. A possible law linking P to K may for instance be $P=(S.H)^K$ wherein Si is the amount of states a single qudit can take (most often 2 and the qudits is then called qubit), and H is a parameter specific for the hardware, usually somewhere between 4 and 14.

After P application of the operator $\hat{p}_n$ on the first (or door) state $|\overline{\Psi_D}\rangle_n$ the average result $|\overline{\Psi_{SO}}\rangle$ of the P spin-off states $|\Psi_{SO}\rangle$ may be, for instance:

$$|\overline{\Psi_{SO}}\rangle = \sqrt{3,5672\%}|1\rangle_1 + \sqrt{96,4333\%}|0\rangle_1 + \sqrt{55,3814\%}|1\rangle_2 + \sqrt{44,6192\%}|0\rangle_2,$$

when the spin-off state $|\Psi_{SO}\rangle$ consists out of two qubits (1,2) as proposed above. So, the measurement of the spin-off state $|\Psi_{SO}\rangle$ is a probability distribution with a certain accuracy related to P. In a publicly agreed format (part of the retrieval protocol), this probability distribution represents a code.

So, in this example there are four average result sub-parts (four percentages): $\langle 1|1\rangle_1$ = 3.5671%, $\langle 0|0\rangle_1$ = 96.434%, $\langle 1|1\rangle_2$ = 55,3824%, and $\langle 0|0\rangle_2$ = 44,6176%.

If now one extracts from each average result sub-part (or percentage) its four most significant figures (K = 4) as defined by the transmitted protocol ordered by $0_1$, $0_2$, $1_1$, $1_2$, then the resulting deterministic bit string (or public key) is 9643446103565538 (9643 for 96.434%, 4461 for 44.6176%, 0356 for 3.5671%, and 5538 for 55.3824%) as defined by the transmitted retrieval protocol.

It is possible for the classical information contained in $|\Psi_{SO}\rangle$ to exceed the amount of classical information required to send the number P of iterations of $\hat{p}_n$, and the sequence via classical channels. Meaning that the information density over the quantum channel is in fact larger than the information density over the classical channel. With the invention this is not a requirement, and will most likely constitute a very large P.

Once the deterministic bit string has been recovered, the quantum cache of the first sub-part S1 of the second processing means PM2 of the nth quantum computer QCn is preferably cleared to remove the local first (or door) state $|\Psi_D\rangle_n$.

Thanks to the invention it is now possible to generate pre-determined keys upon different locations in the hybrid network HN, only as defined by the sender of the key. The method (or protocol) functions as a sort of oracle, spouting the public key only in a specific location, without a continuous strain on the hybrid network HN, and only after an initiation phase.

The operator $\hat{p}_n$ (or non-unitary transformation) is induced by technological separation of the first and second Hilbert spaces, ensuring the fulfilling of the orthogonality demand of the spin-off state and the first (or many-door) state.

The method (or protocol) is a smart way to circumvent the non-cloning theorem by creating a repetitive unique but different spin-off state from the quantum network, and using nonsensical classical information to transmit the quantum-encrypted data, and therefore not violating information relativity (as often coined in non-locality). This allows for (theoretically) unlimited information density, and an implementation even on rudimentary hybrid networks.

It should be appreciated by those skilled in the art that any block diagram herein represent conceptual views of illustrative circuitry embodying the principles of the invention.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Method for sending a deterministic bit string from a sending computer of a plurality of N classical computers (CCn) to a receiving computer of said set of N classical computers (CCn), wherein the N classical computers (CCn) are respectively coupled to N quantum computers (QCn) having respectively N locations within a quantum network and two locally-separable Hilbert spaces, **characterized in that** it comprises:

   - a first step (10) comprising defining, at the location of the sending computer, from the deterministic bit string, a first state $|\Psi_D\rangle_n$ for a first Hilbert space at the location n of the quantum computer (QCn) coupled to the receiving computer with an adjoining operator $\hat{p}_n = (|\Psi_D\rangle\langle\Psi_D|_n + |\Psi_{SO}\rangle\langle\Psi_{SO}|_{n2})$, wherein the spin-off state $|\Psi_{SO}\rangle_{n2}$ may be created in a second Hilbert space at location n by applying the operator $\hat{p}_n$ on the first state $|\Psi_D\rangle_n$;
   - a second step (20) comprising defining at the location of the sending computer N-1 other first states $|\Psi_D\rangle_n$, for a first Hilbert space at N-1 other locations and defining an entangled state $|\Psi_{MD}\rangle$ from said first state $|\Psi_D\rangle_n$ and said N-1 other first states $|\Psi_D\rangle_n$, ;
   - a third step (30) in which i) said operator $\hat{p}_n$ and a definition of a protocol intended for retrieving said deterministic bit string are publically transmitted to the receiving computer, and ii) said entangled state $|\Psi_{MD}\rangle$ is set-up into said N quantum computers (QCn) via said quantum network, wherein the quantum network is a carrier of the entangled state $|\Psi_{MD}\rangle$ with said N quantum computers (QCn) forming N end-points of the entangled state $|\Psi_{MD}\rangle_n$; and
   - a fourth step (40) in which i) the quantum computer (QCn) coupled to the receiving computer (CCn) applies P times said operator $\hat{p}_n$ on the locally first state $|\Psi_D\rangle_n$ resulting from the entangled state $|\Psi_{MD}\rangle$ set-up to obtain P spin-off states $|\Psi_{SO}\rangle_{n2}$ in the second Hilbert space at location n, and ii) said receiving computer (CCn) determines an average result from said P obtained spin-off states $|\Psi_{SO}\rangle_{n2}$ and applies said transmitted protocol to said determined average result to retrieve said deterministic bit string.

2. Method according to claim 1, wherein in said fourth step said nth classical computer (CCn) gets P measurement results from respectively said P spin-off states $|\Psi_{SO}\rangle$ and determines an average result from said P measurement results.

3. Method according to claim 2, wherein in said fourth step said protocol comprises extracting a chosen part from sub-parts of said average result and combining said extracted chosen parts to retrieve said deterministic bit string.

4. Method according to claim 3, wherein in said fourth step each of said average result sub-parts may be measured as percentage, and said receiving computer (CCn) extracts K most significant figures from each of said average result sub-parts.

5. Method according to one of claims 1 to 4, wherein in said first step said operator $\hat{p}_n$ is represented by at least one gate-based non-unitary quantum circuit of said quantum computer (QCn) coupled to the receiving computer (CCn).

6. Method according to one of claims 1 to 5, wherein in said first step the first state $|\Psi_D\rangle_n$ is defined by at least one qubit.

7. Method according to one of claims 1 to 6, wherein in said first step said spin-off state $|\Psi_{SO}\rangle_{n2}$ is orthogonal to said defined first state $|\Psi_D\rangle_n$ if they are in equal Hilbert spaces, n=n2.

8. System (CS) for sending a deterministic bit string from a sending computer of a plurality of N classical computers (CCn) to a receiving computer of said plurality of N classical computers (CCn), wherein the N classical computers (CCn) are respectively coupled to N quantum computers (QCn) having respectively N locations within a quantum network and two separable Hilbert spaces, **characterized in that** it comprises:

- first processing means (PM1) for defining, at the location of the sending computer, from the deterministic bit string, a first state $|\Psi_D\rangle_n$ for a first Hilbert space at the location n of the quantum computer (QCn) coupled to the receiving computer with an adjoining operator $\hat{p}_n = (|\Psi_D\rangle\langle\Psi_D|_n + |\Psi_{SO}\rangle\langle\Psi_{SO}|_{n2})$, wherein the spin-off state $|\Psi_{SO}\rangle_{n2}$ may be created in a second Hilbert space at location n by applying the operator $\hat{p}_n$ on the first state $|\Psi_D\rangle_n$ and for defining, at the location of the sending computer, N-1 other first states $|\Psi_D\rangle_n$, for a first Hilbert space at N-1 other locations and an entangled state $|\Psi_{MD}\rangle$ from said first state $|\Psi_D\rangle_n$ and said N-1 other first states $|\Psi_D\rangle_{n'}$,
- first control means (CM1) for controlling public transmission of said operator $\hat{p}_n$ to the receiving computer (CCn) and a definition of a protocol intended for retrieving said deterministic bit string,
- second control means (CM2) for controlling set-up of said entangled state $|\Psi_{MD}\rangle$ into said N quantum computers (QCn) via said quantum network, wherein the quantum network is a carrier of the entangled state $|\Psi_{MD}\rangle$ with said N quantum computers (QCn) forming N end-points of the entangled state $|\Psi_{MD}\rangle$,
- second processing means (PM2) for applying P times said operator $\hat{p}_n$ on the locally first state $|\Psi_D\rangle_n$ resulting from said set-up of the entangled state $|\Psi_{MD}\rangle$ into said quantum computer (QCn) coupled to the receiving computer (CCn) to obtain P spin-off states $|\Psi_{SO}\rangle_{n2}$ in the second Hilbert space at location n, and
- third processing means (PM3) for determining an average result from said P obtained spin-off states $|\Psi_{SO}\rangle$ into said receiving computer (CCn), and applying said transmitted protocol to said determined average result to retrieve said deterministic bit string.

9. System according to claim 8, wherein said first processing means (PM1) and said first control means (CM1) are intended to equip a control computer (CC).

10. System according to one of claims 8 and 9, wherein said third processing means (PM3) are intended to be distributed into each of said N classical computers (CCn).

11. System according to one of claims 8 to 10, wherein said second processing means (PM2) are intended to be distributed into each of said N quantum computers (QCn).

**Patentansprüche**

1. Verfahren zum Senden einer deterministischen Bitfolge aus einem sendenden Computer einer Vielzahl von N klassischen Computern (CCn) an einen empfangenden Computer der Menge von N klassischen Computern (CCn), wobei die N klassischen Computer (CCn) jeweils mit N Quantencomputern (QCn) gekoppelt sind, die jeweils N Orte innerhalb eines Quantennetzwerks und zwei lokalseparierbare Hilberträume aufweisen, **dadurch gekennzeichnet, dass** das Verfahren umfasst:

- einen ersten Schritt (10), der am Ort des sendenden Computers aus der deterministischen Bitfolge das Definieren eines ersten Zustands $|\Psi_D\rangle_n$ für einen ersten Hilbertraum am Ort n des mit dem empfangenden Computer gekoppelten Quantencomputers (QCn) mit einem adjungierten Operator $\hat{p}_n = (|\Psi_D\rangle\langle\Psi_D|_n + |\Psi_{SO}\rangle\langle\Psi_{SO}|_{n2})$ umfasst, wobei der Spin-off-Zustand $|\Psi_{SO}\rangle n2$ in einem zweiten Hilbertraum am Ort n durch Anwenden des Operators

$\hat{p}_n$ auf den ersten Zustand $|\Psi_D\rangle_n$ erzeugt werden kann;

- einen zweiten Schritt (20), der am Ort des sendenden Computers N-1 das Definieren anderer erster Zustände $|\Psi_D\rangle_{n'}$ für einen ersten Hilbertraum an N-1 anderen Orten und das Definieren eines verschränkten Zustands $|\Psi_{MD}\rangle$ aus dem ersten Zustand $|\Psi_D\rangle_n$ und den N-1 anderen ersten Zuständen $|\Psi_D\rangle_{n'}$ umfasst;

- einen dritten Schritt (30), bei dem i) der Operator $\hat{p}_n$ und eine Definition eines Protokolls, das zum Auslesen der deterministischen Bitfolge bestimmt ist, öffentlich an den empfangenden Computer übertragen werden, und ii) der verschränkte Zustand $|\Psi_{MD}\rangle$ über das Quantennetzwerk in den N Quantencomputern (QCn) eingerichtet wird, wobei das Quantennetzwerk ein Träger des verschränkten Zustands $|\Psi_{MD}\rangle$ ist, wobei die N Quantencomputer (QCn) N Endpunkte des verschränkten Zustands $|\Psi_{MD}\rangle$ bilden; und

- einen vierten Schritt (40), bei dem i) der mit dem empfangenden Computer (CCn) gekoppelte Quantencomputer (QCn) P-mal den Operator $\hat{p}_n$ auf den lokal ersten Zustand $|\Psi_D\rangle_n$ anwendet, der sich aus dem Einrichten des verschränkten Zustands $|\Psi_{MD}\rangle$ ergibt, um P Spin-off-Zustände $|\Psi_{SO}\rangle n2$ im zweiten Hilbertraum am Standort n zu erhalten, und ii) der empfangende Computer (CCn) ein Durchschnittsergebnis aus den P erhaltenen Spin-off-Zuständen $|\Psi_{SO}\rangle n2$ bestimmt und das übertragene Protokoll auf das bestimmte Durchschnittsergebnis anwendet, um die deterministische Bitfolge auszulesen.

2. Verfahren nach Anspruch 1, wobei in dem vierten Schritt der n-te klassische Computer (CCn) P Messergebnisse aus den jeweiligen P Spin-off-Zuständen $|\Psi_{SO}\rangle$ erhält und ein Durchschnittsergebnis aus den P Messergebnissen bestimmt.

3. Verfahren nach Anspruch 2, wobei in dem vierten Schritt das Protokoll das Extrahieren eines ausgewählten Teils aus Unterteilen des Durchschnittsergebnisses und das Kombinieren der extrahierten ausgewählten Teile umfasst, um die deterministische Bitfolge auszulesen.

4. Verfahren nach Anspruch 3, wobei in dem vierten Schritt jeder der Durchschnittsergebnisunterteile als Prozentsatz gemessen werden kann und der empfangende Computer (CCn) K höchstwertige Ziffern aus jedem der Durchschnittsergebnisunterteile extrahiert.

5. Verfahren nach einem der Ansprüche 1 bis 4, wobei im ersten Schritt der Operator $\hat{p}_n$ durch mindestens eine gatterbasierte nichtunitäre Quantenschaltung des Quantencomputers (QCn) dargestellt wird, die mit dem empfangenden Computer (CCn) gekoppelt ist.

6. Verfahren nach einem der Ansprüche 1 bis 5, wobei im ersten Schritt der erste Zustand $|\Psi_D\rangle_n$ durch mindestens ein Qubit definiert wird.

7. Verfahren nach einem der Ansprüche 1 bis 6, wobei im ersten Schritt der Spin-off-Zustand $|\Psi_{SO}\rangle_{n2}$ orthogonal zu dem definierten ersten Zustand $|\Psi_D\rangle_n$ ist, wenn sie sich in gleichen Hilberträumen, n=n2, befinden.

8. System (CS) zum Senden einer deterministischen Bitfolge aus einem sendenden Computer einer Vielzahl von N klassischen Computern (CCn) an einen empfangenden Computer der Vielzahl von N klassischen Computern (CCn), wobei die N klassischen Computer (CCn) jeweils an N Quantencomputer (QCn) gekoppelt sind, die jeweils N Standorte innerhalb eines Quantennetzwerks und zwei separable Hilberträume aufweisen, **dadurch gekennzeichnet, dass** das Verfahren umfasst:

- eine erste Verarbeitungseinrichtung (PM1), um am Ort des sendenden Computers aus der deterministischen Bitfolge einen ersten Zustand $|\Psi_D\rangle_n$ für einen ersten Hilbertraum am Ort n des mit dem empfangenden Computer gekoppelten Quantencomputers (QCn) mit einem adjungierten Operator $\hat{p}_n = (|\Psi_D\rangle\langle\Psi_D|_n + |\Psi_{SO}\rangle\langle\Psi_{SO}|_{n2})$ zu definieren, wobei der Spin-off-Zustand $|\Psi_{SO}\rangle_{n2}$ in einem zweiten Hilbertraum am Ort n durch Anwenden des Operators $P_n$ auf den ersten Zustand $|\Psi_D\rangle_n$ erzeugt werden kann, und um am Ort des sendenden Computers N-1 andere erste Zustände $|\Psi_D\rangle_{n'}$ für einen ersten Hilbertraum an N-1 anderen Orten und einen verschränkten Zustand $|\Psi_D\rangle_n$ aus dem ersten Zustand $|\Psi_D\rangle_n$ und den N-1 anderen ersten Zuständen $|\Psi_D\rangle_{n'}$ zu definieren,

- eine erste Steuereinrichtung (CM1) zum Steuern einer öffentlichen Übertragung des Operators $\hat{p}_n$ an den empfangenden Computer (CCn) und einer Definition eines Protokolls, das zum Auslesen der deterministischen Bitfolge bestimmt ist,

- eine zweite Steuereinrichtung (CM2) zum Steuern der Einrichtung des verschränkten Zustands $|\Psi_{MD}\rangle$ in den N Quantencomputern (QCn) über das Quantennetzwerk, wobei das Quantennetzwerk ein Träger des verschränkten Zustands $|\Psi_{MD}\rangle$ ist, wobei die N Quantencomputer (QCn) N Endpunkte des verschränkten Zustands $|\Psi_{MD}\rangle$ bilden,

- eine zweite Verarbeitungseinrichtung (PM2) zum P-maligen Anwenden des Operators $\hat{p}_n$ auf den lokal ersten Zustand $|\Psi_D\rangle_n$, der sich aus dem Einrichten des verschränkten Zustands $|\Psi_{MD}\rangle$ in den Quantencomputer (QCn) ergibt, der mit dem empfangenden Computer (CCn) gekoppelt ist, um am Ort n P Spin-off-Zustände $|\Psi_{SO}\rangle_{n2}$ im zweiten Hilbertraum zu erhalten, und
- eine dritte Verarbeitungseinrichtung (PM3) zum Bestimmen eines Durchschnittsergebnisses aus den P erhaltenen Spin-off-Zuständen $|\Psi_{SO}\rangle$ in den empfangenden Computer (CCn) und Anwenden des übertragenen Protokolls auf das bestimmte Durchschnittsergebnis, um die deterministische Bitfolge auszulesen.

9. System nach Anspruch 8, wobei die erste Verarbeitungseinrichtung (PM1) und die erste Steuereinrichtung (CM1) dazu vorgesehen sind, einen Steuercomputer (CC) auszustatten.

10. System nach einem der Ansprüche 8 und 9, wobei die dritte Verarbeitungseinrichtung (PM3) dazu vorgesehen ist, auf jeden der N klassischen Computer (CCn) verteilt zu werden.

11. System nach einem der Ansprüche 8 bis 10, wobei die zweite Verarbeitungseinrichtung (PM2) dazu vorgesehen ist, auf jeden der N Quantencomputer (QCn) verteilt zu werden.

**Revendications**

1. Procédé d'envoi d'une chaîne de bits déterministe par un ordinateur émetteur d'une pluralité de N ordinateurs classiques (CCn) à un ordinateur récepteur dudit ensemble de N ordinateurs classiques (CCn), les N ordinateurs classiques (CCn) étant respectivement couplés à N ordinateurs quantiques (QCn) ayant respectivement N emplacements dans un réseau quantique et deux espaces de Hilbert localement séparables, **caractérisé en ce qu'**il comprend :

- une première étape (10) comprenant la définition, à l'emplacement de l'ordinateur émetteur, à partir de la chaîne de bits déterministe, d'un premier état $|\Psi_D\rangle_n$ pour un premier espace de Hilbert à l'emplacement n de l'ordinateur quantique (QCn) couplé à l'ordinateur récepteur avec un opérateur adjoint $\hat{p}_n = (|\Psi_D\rangle\langle\Psi_D|_n + |\Psi_{SO}\rangle\langle\Psi_{SO}|_{n2})$, dans lequel l'état de spin-off $|\Psi_{SO}\rangle_{n2}$ peut être créé dans un deuxième espace de Hilbert à l'emplacement n par application de l'opérateur $\hat{p}_n$ au premier état $|\Psi_D\rangle_n$;
- une deuxième étape (20) comprenant la définition, à l'emplacement de l'ordinateur émetteur, de N-1 autres premiers états $|\Psi_D\rangle_n$, pour un premier espace de Hilbert, à N-1 autres emplacements, et la définition d'un état intriqué $|\Psi_{MD}\rangle$ à partir dudit premier état $|\Psi_D\rangle_n$ et desdits N-1 autres premiers états $|\Psi_D\rangle_{n'}$ ;
- une troisième étape (30), dans laquelle i) ledit opérateur $\hat{p}_n$ et une définition d'un protocole destiné à récupérer ladite chaîne de bits déterministe sont publiquement transmis à l'ordinateur récepteur, et ii) ledit état intriqué $|\Psi_{MD}\rangle$ est établi dans lesdits N ordinateurs quantiques (QCn) via ledit réseau quantique, ledit réseau quantique étant un porteur de l'état intriqué $|\Psi_{MD}\rangle$ avec lesdits N ordinateurs quantiques (QCn) formant N points terminaux de l'état intriqué $|\Psi_{MD}\rangle$ ; et
- une quatrième étape (40), dans laquelle i) l'ordinateur quantique (QCn) couplé à l'ordinateur récepteur (CCn) applique P fois ledit opérateur $\hat{p}_n$ au premier état $|\Psi_D\rangle_n$ local résultant de l'état intriqué $|\Psi_{MD}\rangle$ établi, pour obtenir P états de spin-off $|\Psi_{SO}\rangle_{n2}$ dans le deuxième espace de Hilbert à l'emplacement n, et ii) ledit ordinateur récepteur (CCn) détermine un résultat moyen à partir desdits P états de spin-off $|\Psi_{SO}\rangle_{n2}$ obtenus et applique ledit protocole transmis audit résultat moyen déterminé pour récupérer ladite chaîne de bits déterministe.

2. Procédé selon la revendication 1, dans lequel, dans ladite quatrième étape, ledit n$^{\text{ième}}$ ordinateur classique (CCn) obtient P résultats de mesure à partir desdits P états de spin-off $|\Psi_{SO}\rangle$ respectifs et détermine un résultat moyen à partir desdits P résultats de mesure.

3. Procédé selon la revendication 2, dans lequel, dans ladite quatrième étape, ledit protocole comprend l'extraction d'une partie choisie depuis des sous-parties dudit résultat moyen et la combinaison desdites parties choisies extraites pour récupérer ladite chaîne de bits déterministe.

4. Procédé selon la revendication 3, dans lequel, dans ladite quatrième étape, chacune desdites sous-parties du résultat moyen peut être mesurée sous la forme d'un pourcentage, et ledit ordinateur récepteur (CCn) extrait K chiffres les plus significatifs de chacune desdites sous-parties du résultat moyen.

5. Procédé selon l'une des revendications 1 à 4, dans lequel, dans ladite première étape, ledit opérateur $\hat{p}_n$ est

représenté par au moins un circuit quantique non-unitaire à base de portes dudit ordinateur quantique (QCn) couplé à l'ordinateur récepteur (CCn).

6. Procédé selon l'une des revendications 1 à 5, dans lequel, dans ladite première étape, le premier état $|\Psi_D\rangle_n$ est défini par au moins un qubit.

7. Procédé selon l'une des revendications 1 à 6, dans lequel, dans ladite première étape, ledit état de spin-off $|\Psi_{SO}\rangle_{n2}$ est orthogonal audit premier état défini $|\Psi_D\rangle_n$ s'ils se trouvent dans des espaces de Hilbert égaux, n=n2.

8. Système (CS) l'envoi d'une chaîne de bits déterministe par un ordinateur émetteur d'une pluralité de N ordinateurs classiques (CCn) à un ordinateur récepteur de ladite pluralité de N ordinateurs classiques (CCn), les N ordinateurs classiques (CCn) étant respectivement couplés à N ordinateurs quantiques (QCn) ayant respectivement N emplacements dans un réseau quantique et deux espaces de Hilbert séparables, **caractérisé en ce qu'**il comprend :

   - des premiers moyens de traitement (PM1) pour définir, à l'emplacement de l'ordinateur émetteur, à partir de la chaîne de bits déterministe, un premier état $|\Psi_D\rangle_n$ pour un premier espace de Hilbert à l'emplacement n de l'ordinateur quantique (QCn) couplé à l'ordinateur récepteur avec un opérateur adjoint $\hat{p}_n = (|\Psi_D\rangle\langle\Psi_D|_n + |\Psi_{SO}\rangle\langle\Psi_{SO}|_{n2})$, dans lequel l'état de spin-off $|\Psi_{SO}\rangle_{n2}$ peut être créé dans un deuxième espace de Hilbert à l'emplacement n par application de l'opérateur $\hat{p}_n$ au premier état $|\Psi_D\rangle_n$, et pour définir, à l'emplacement de l'ordinateur émetteur, de N-1 autres premiers états $|\Psi_D\rangle_n$, pour un premier espace de Hilbert, à N-1 autres emplacements, et un état intriqué $|\Psi_{MD}\rangle$ à partir dudit premier état $|\Psi_D\rangle_n$ et desdits N-1 autres premiers états $|\Psi_D\rangle_{n'}$
   - des premiers moyens de commande (CM1) pour commander une transmission publique dudit opérateur $\hat{p}_n$ à l'ordinateur récepteur (CCn) et une définition d'un protocole destiné à récupérer ladite chaîne de bits déterministe,
   - des deuxièmes moyens de commande (CM2) pour commander l'établissement dudit état intriqué $|\Psi_{MD}\rangle$ dans lesdits N ordinateurs quantiques (QCn) via ledit réseau quantique, ledit réseau quantique étant un porteur de l'état intriqué $|\Psi_{MD}\rangle$ avec lesdits N ordinateurs quantiques (QCn) formant N points terminaux de l'état intriqué $|\Psi_{MD}\rangle$,
   - des deuxièmes moyens de traitement (PM2) pour appliquer P fois ledit opérateur $\hat{p}_n$ au premier état $|\Psi_D\rangle_n$ local résultant dudit établissement de l'état intriqué $|\Psi_{MD}\rangle$ dans ledit ordinateur quantique (QCn) couplé à l'ordinateur récepteur (CCn) pour obtenir P états de spin-off $|\Psi_{SO}\rangle_{n2}$ dans le deuxième espace de Hilbert à l'emplacement n, et
   - des troisièmes moyens de traitement (PM3) pour déterminer un résultat moyen à partir desdits P états de spin-off $|\Psi_{SO}\rangle$ obtenus dans ledit ordinateur récepteur (CCn), et appliquer ledit protocole transmis audit résultat moyen déterminé pour récupérer ladite chaîne de bits déterministe.

9. Système selon la revendication 8, dans lequel lesdits premiers moyens de traitement (PM1) et lesdits premiers moyens de commande (CM1) sont destinés à équiper un ordinateur de commande (CC).

10. Système selon l'une des revendications 8 et 9, dans lequel lesdits troisièmes moyens de traitement (PM3) sont destinés à être répartis dans chacun desdits N ordinateurs classiques (CCn).

11. Système selon l'une des revendications 8 à 10, dans lequel lesdits deuxièmes moyens de traitement (PM2) sont destinés à être répartis dans chacun desdits N ordinateurs quantiques (QCn).

FIG.1

FIG.2